# EUROPEAN PATENT SPECIFICATION

(11) **EP 3 181 449 B1**
(45) Date of publication and mention of the grant of the patent: **12.06.2019**
(21) Application number: 16201250.4
(22) Date of filing: 29.11.2016
(51) Int. Cl.: B64C 39/02, B64C 27/00, B64C 27/32

(54) **MULTI-ROTOR STRUCTURE APPLIED TO UNMANNED AERIAL VEHICLE**
MEHRROTORSTRUKTUR ZUR VERWENDUNG IN EINEM UNBEMANNTEN LUFTFAHRZEUG
STRUCTURE À ROTORS MULTIPLES APPLIQUÉE À UN VÉHICULE AÉRIEN SANS PILOTE

(30) Priority: 30.11.2015 CN 201510855805
(43) Date of publication of application: 21.06.2017
(73) Proprietor: Ewatt Technology Co., Wuhan Hubei 430000 (CN)
(72) Inventor: ZHAO, Guocheng, Wuhan, Hubei 430000 (CN); FAN, Hui, Wuhan, Hubei 430000 (CN); CHEN, Fangfang, Wuhan, Hubei 430000 (CN)
(74) Representative: Roman, Alexis

(56) References cited:
- EP-A1- 2 873 614
- WO-A1-2014/190774
- CN-A- 104 002 964
- CN-U- 203 261 731
- CN-U- 204 078 069
- CN-U- 204 341 394
- CN-U- 204 507 263
- CN-U- 204 674 818

## Description

### Field of the Invention

The present invention relates to the technical field of unmanned aerial vehicles, and particularly to a multi-rotor structure applied to an unmanned aerial vehicle.

### Background of the Invention

A pilotless aircraft is referred to as an "unmanned aerial vehicle", and is an unmanned aircraft that is manipulated by radio remote control equipment and its own program control device. No cockpit is provided in the unmanned aerial vehicle, but an autopilot, the program control device, a signal collection device and the like are installed thereon. Personnel on the ground, on a naval vessel or a master remote control station carries out tracking, positioning, remote control, telemetering and digital transmission on it by radar and other equipment. The unmanned aerial vehicle can take off just like an ordinary aircraft under radio remote control or is launched by a booster rocket, and can also be carried by a master into the air for flying.

For the unmanned aerial vehicle in the prior art, a drive motor is generally fixed at an end part of a rotor shaft, a rotor for the take-off of the unmanned aerial vehicle is generally directly fixed on the drive motor by bolts, and then the rotor is driven by the drive motor to rotate.

However, in this connection manner of directly fixing by bolts, no matter the rotor is to be mounted on the drive motor or the rotor is dismounted from the drive motor, the bolts need to be screwed/unscrewed by an external handle to accomplish the mounting and dismounting work of the rotor, particularly for a multi-rotor unmanned aerial vehicle, which has a large number of rotors, and when the multiple rotors of the multi-rotor unmanned aerial vehicle need to be mounted or dismounted, the mounting and dismounting work is very troublesome, thereby affecting the working efficiency of workers. Unmanned aerial vehicles with multiple rotors are known for example from CN204341394, CN204507263, WO2014/190774 and CN204674818.

### Summary of the Invention

The present invention provides an unmanned aerial vehicle comprising a multi-rotor structure according to claim 1, in order to solve or partially solve the technical defect in the prior art that when multiple rotors of a multi-rotor unmanned aerial vehicle are mounted or dismounted, the mounting and dismounting work is very troublesome, thereby affecting the working efficiency of workers.

The present invention provides an unmanned aerial vehicle, wherein the unmanned aerial vehicle includes a fuselage, at least four first rotors, second rotors the number of which is same as that of the first rotors, and rotor shafts the number of which is same as that of the first rotors or the second rotors each rotor arm being provided with a first rotor and a second rotor; the multi-rotor structure includes: first rotary connecting pieces the number of which is same as that of the first rotors, wherein one of the first rotors is rotationally connected with one of the rotor arms through one of the first rotary connecting pieces, and the first rotary connecting piece includes: a first motor, wherein the first motor includes a first surface and a second surface, and the first motor is fixed on the rotor arm through the second surface; a first dismounting thread group, wherein the first rotor is rotationally connected with the first surface through the first dismounting thread group to achieve the mounting or dismounting between the first rotor and the first motor just by rotating the first rotor; second rotary connecting pieces the number of which is same as that of the second rotors, wherein one of the second rotors is rotationally connected with one of the rotor arms through one of the second rotary connecting pieces, and the second rotary connecting piece includes: a second motor, wherein the second motor includes a third surface and a fourth surface, and the second motor is fixed on the rotor arm through the fourth surface; and a second dismounting thread group, wherein the second rotor is rotationally connected with the third surface through the second dismounting thread group to achieve the mounting or dismounting between the second rotor and the second motor just by rotating the second rotor.

Optionally, the first dismounting thread group includes: a first screw; a second screw; a first threaded buckle, wherein first internal threads are arranged on an inner wall of the first threaded buckle, and a first threaded hole is formed in the bottom of the first threaded buckle, thus allowing the first screw to penetrate through the first threaded hole to fix the first threaded buckle on the first surface; and a first dismounting nut, wherein first external threads are arranged on an outer wall of the first dismounting nut, and a second threaded hole is formed in the top of the first dismounting nut, thus allowing the second screw to penetrate through the first rotor and the second threaded hole successively to fix the first dismounting nut on the first rotor; and wherein the first internal threads are adaptive to the first external threads, and the mounting or dismounting between the first rotor and the first motor is correspondingly achieved by the engagement or disengagement of the first internal threads and the first external threads.

Optionally, the first dismounting thread group further includes: a first damping piece, wherein a first through hole is formed in the first damping piece, and the second screw penetrates through the first through hole, the first rotor and the second threaded hole successively to fix the first dismounting nut on the first rotor.

Optionally, the second dismounting thread group includes: a third screw; a fourth screw; a second threaded buckle, wherein second internal threads are arranged on the inner wall of the second threaded buckle, and a third threaded hole is formed in the bottom of the second threaded buckle, thus allowing the third screw to penetrate through the third threaded hole to fix the second threaded buckle on the third surface; and a second dismounting nut, wherein second external threads are arranged on the outer wall of the second dismounting nut, and a fourth threaded hole is formed in the top of the second dismounting nut, thus allowing the fourth screw to penetrate through the second rotor and the third threaded hole successively to fix the second dismounting nut on the second rotor; and wherein the second internal threads are adaptive to the second external threads, and the mounting or dismounting between the second rotor and the second motor is correspondingly achieved by the engagement or disengagement of the second internal threads and the second external threads.

Optionally, the first dismounting thread group further includes: a second damping piece, wherein a second through hole is formed in the second damping piece, and the fourth screw penetrates through the second through hole, the second rotor and the fourth threaded hole successively to fix the second dismounting nut on the second rotor.

Optionally, the multi-rotor structure further includes: folding components, wherein each folding component is used for rotationally connecting the fuselage with the rotor arm to cause the rotor arm to rotate relative to the fuselage through the folding component, so as to achieve the unfolding or folding of the rotor arm relative to the fuselage.

Optionally, the folding component includes: a side plate part, wherein the side plate part is fixed on the end part of the rotor arm a rotating part, wherein the rotating part is fixed on the fuselage and is rotationally connected with the side plate part to achieve the rotatability between the side plate part and the rotating part, to allow the rotor arm to rotate relative to the fuselage; and a limiting part, wherein the limiting part is fixed on the side plate part for positioning a rotation angle of the rotating part relative to the side plate part.

Optionally, the end part of the rotor arm includes a first side face and a second side face, and the first side face and the second side face are symmetrically distributed on both sides of the end part of the rotor arm the side plate part includes: a first side plate, wherein the first side plate is fixed on the first side face; and a second side plate, wherein the second side plate is fixed on the second side face; and wherein a sliding groove is respectively formed in the first side plate and the second side plate to cause the limiting part to slide in the sliding groove.

Optionally, the limiting part includes: a fixing rod, wherein the fixing rod is fixed between the first side plate and the second side plate and is respectively perpendicular to the first side plate and the second side plate, and a sliding hole is formed in the fixing rod; a limiting rod, wherein the limiting rod is placed in the sliding groove and is in sliding connection with the sliding groove; and a tension bar, wherein one end of the tension bar penetrates through the sliding hole to be fixedly connected with the limiting rod so that the limiting rod is caused to slide in the sliding groove by pulling the tension bar.

Optionally, the rotating part includes: a first swing lug, wherein a first swing hole is formed in the first swing lug; a second swing lug, wherein a second swing hole corresponding to the first swing hole is formed in the second swing lug; a fixing cylinder, wherein one end of the fixing cylinder is fixed on the fuselage, and the other end of the fixing cylinder is fixedly connected with the first swing lug and the second swing lug respectively; and a rotating shaft, wherein the rotating shaft penetrates through the first side plate, the first swing hole, the second swing hole and the second side plate successively to rotationally connect the side plate part with the rotating part.

### Beneficial effects:

According to the multi-rotor structure applied to the unmanned aerial vehicle provided by the present invention, each first rotor is rotationally connected with the first surface of the first motor by one corresponding first dismounting thread group, so that when the mounting or dismounting work of the first rotor is carried out, the fastening or separation between the first rotor and the first motor can be achieved just by rotating the first rotor, each second rotor is rotationally connected with the third surface of the second motor by one corresponding second dismounting thread group, so that when the mounting or dismounting work of the second rotor is carried out, the fastening or separation between the second rotor and the second motor can be achieved just by rotating the second rotor, that is, the mounting or dismounting work of the rotors can be accomplished without using an external operating tool (e.g., a handle), thereby being fast, portable and high in working efficiency.

### Brief Description of the Drawings

To illustrate technical solutions in the embodiments of the present invention or in the prior art more clearly, a brief introduction on the accompanying drawings which are needed in the description of the embodiments is given below. Apparently, the accompanying drawings in the description below are merely some of the embodiments of the present invention, based on which other drawings can be obtained by those of ordinary skill in the art without any creative effort.
Fig. 1 is a schematic diagram of an overall structure of a multi-rotor structure applied to an unmanned aerial vehicle not part of the present invention;
Fig. 2 is a side view of Fig. 1;
Fig. 3 is a split-structure side view illustrating a connection relation of a first rotor, a first dismounting thread group and a rotor shaft in Fig. 1;
Fig. 4 is a side view of an overall structure of the connection relation of the first rotor, the first dismounting thread group and the rotor shaft in Fig. 3;
Fig. 5 is a first schematic diagram of an overall structure of a folding component in Fig. 1;
Fig. 6 is a top view of the folding component in Fig. 5;
Fig. 7 is a second schematic diagram of the overall structure of the folding component in Fig. 1;
Fig. 8 is a top view of the folding component in Fig. 7;
Fig. 9 is a first schematic diagram of an overall structure of a sliding component in Fig. 1;
Fig. 10 is a side view of the sliding component in Fig. 9;
Fig. 11 is a split schematic diagram illustrating the connection relation of the first rotor, a second rotor and the rotor shaft in a multi-rotor structure is applied to an unmanned aerial vehicle provided by an embodiment of the present invention.

### Detailed Description of the Embodiments

A clear and complete description of technical solutions in the embodiments of the present invention will be given below, in combination with the accompanying drawings in the embodiments of the present invention. Apparently, the embodiments described are merely a part, but not all, of the embodiments of the present invention. All of other embodiments, obtained by those of ordinary skill in the art based on the embodiments of the present invention, fall into the protection scope of the present invention. The keywords "and/or" involved in the embodiments express two situations (and/or). In other words, the A and/or B mentioned in the embodiments of the present invention express two situations of A and B, and A or B, and express three existence states of A and B, for example, A and/or B expresses: only including A and not including B; only including B and not including A; and including A and B.

Meanwhile, in the embodiments of the present invention, when a component is described as being "fixed to" another component, it can be directly located on the other component or an intermediate component can also be present. When a component is deemed as being "connected" to another component, it can be directly connected to the component or an intermediate component can also be present at the same time. When a component is deemed as being "arranged" on another component, it can be directly arranged on the other component or an intermediate component can also be present at the same time. The terms "vertical", "horizontal", "left", "right" and similar expressions used in the embodiments of the present invention are for illustrative purposes only and are not intended to limit the present invention.

According to a multi-rotor structure applied to an unmanned aerial vehicle, each first rotor is rotationally connected with a first surface of a first motor by a corresponding first dismounting thread group, so that when the mounting or dismounting work of the first rotor is carried out, the fastening or separation between the first rotor and the first motor can be achieved just by rotating the first rotor, each second rotor is rotationally connected with a third surface of a second motor by a corresponding second dismounting thread group, so that when the mounting or dismounting work of the second rotor is carried out, the fastening or separation between the second rotor and the second motor can be achieved just by rotating the second rotor, that is, the mounting or dismounting work of the rotors can be accomplished without using an external operating tool (e.g. a handle), thereby being fast, portable and high in working efficiency.

### First embodiment

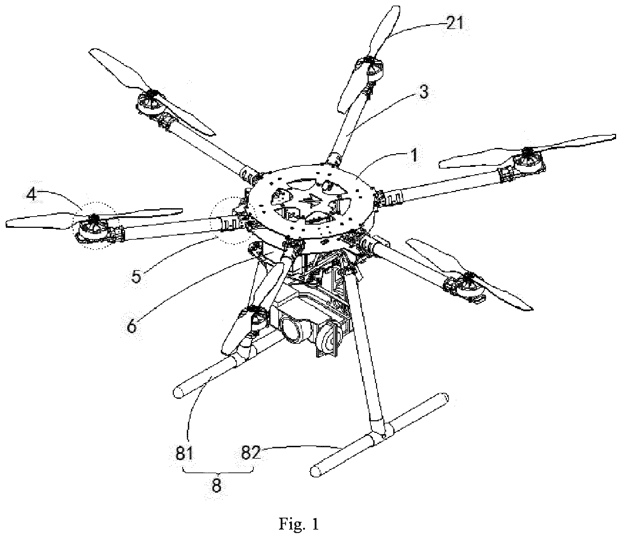

Referring to Figs. 1-2, when the multi-rotor is applied to an unmanned aerial vehicle that only includes first rotors 21, the unmanned aerial vehicle at least includes: a fuselage 1, at least four first rotors 2, rotor arms 3 the number of which is same as that of the first rotors 21, folding components 5 the number of which is same as that of the first rotors 21, a sliding component 6 used for placing a battery and a bracket 8. The multi-rotor structure includes: first rotary connecting pieces 4 the number of which is same as that of the first rotors 21.

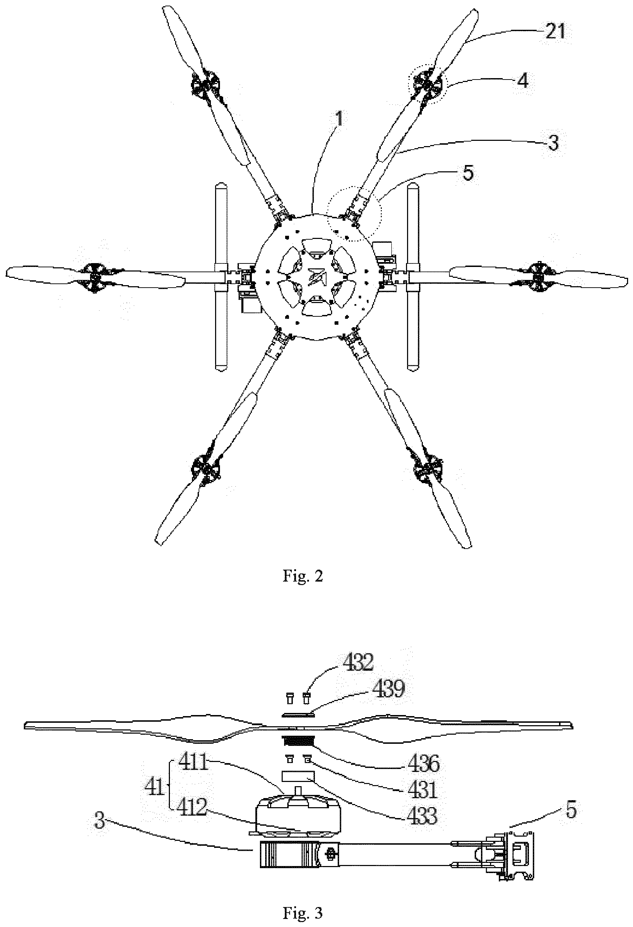

One of the first rotors 21 is detachably connected with one of the rotor arms 3 through one of the first rotary connecting pieces 4. As shown in Figs. 3-4, the first rotary connecting piece 4 at least includes: a first motor 41 and a first dismounting thread group 43. The first motor 41 is used for driving the first rotor 21 to rotate to drive the fuselage 1 to fly. The first motor 41 includes a first surface 411 and a second surface 412. In the embodiment of the present invention, as shown in Fig. 3, the first surface 411 can be understood as an upper surface of the first motor 41, the second surface 412 can be understood as a lower surface of the first motor 41, and the first motor 41 is fixed on the rotor arm 3 through the first surface 411. Meanwhile, the first rotor 21 is detachably connected with the first surface 411 of the first motor 41 through the first dismounting thread group 43.

With respect to the connection mode of the first rotor 21 and the first motor 41, in the first embodiment of the present invention, the first dismounting thread group 43 is additionally arranged, and the first rotor 21 is in threaded connection with the first motor 41 through the first dismounting thread group 43. Therefore, in an actual working process, when a plurality of rotors of the unmanned aerial vehicle need to be mounted or dismounted, only the first rotor 21 needs to be rotated, for example, the first rotor 21 is rotated clockwise or the first rotor 21 is rotated counterclockwise to achieve the mounting or dismounting between the first rotor 21 and the first motor 41.

Compared with the traditional mode of fixing the first rotor 21 on the first motor 41 directly by bolts, when the first rotor 21 needs to be dismounted from or mounted on the first motor 41, the bolts need to be screwed by an external handle to accomplish the dismounting and mounting work of the first rotor 21. Since the fixing bolt for connecting the first rotor 21 with the first motor 41 is an individual component existing separately, when the bolt is unscrewed by the handle to dismount it, the fixing bolt is liable to get lost due to the complicated onsite operating environment, and once the fixing bolt is lost, the mounting work of the first rotor 21 and the first motor 41 cannot be accomplished, thereby resulting in a serious result that the flight equipment cannot fly. In the embodiment of the present invention, the first rotor 21 is in threaded connection with the first motor 41 through the first dismounting thread group 43, so that when they are mounted or dismounted, no external operating tool (e.g., the handle) is needed, thereby being fast, convenient and high in working efficiency.

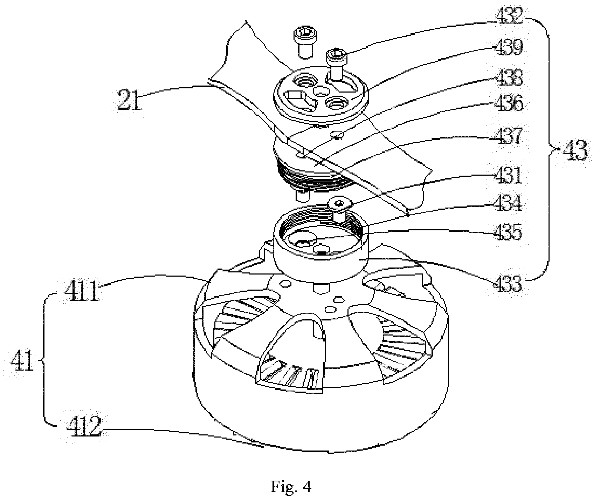

For the first dismounting thread group 43, further referring to Fig. 4, the first dismounting thread group 43 at least includes: a first screw 431, a second screw 432, a first threaded buckle 433 and a first dismounting nut 436. First internal threads 434 are arranged on an inner wall of the first threaded buckle 433, and a first threaded hole 435 is formed in the bottom of the first threaded buckle 433, thus allowing the first screw 431 to penetrate through the first threaded hole 435 to fix the first threaded buckle 433 on the first surface 411 of the first motor 41. First external threads 437 adaptive to the first internal threads 434 are arranged on an outer wall of the first dismounting nut 436, and a second threaded hole 438 is formed in the top of the first dismounting nut 436, thus allowing the second screw 432 to penetrate through the first rotor 21 and the second threaded hole 438 successively to fix the first dismounting nut 436 on the first rotor 21.

The first threaded buckle 433 is fixed on the first surface 411 of the first motor 41 through the first screw 431, and the first dismounting nut 436 is fixed on the first rotor 21 through the second screw 432. The first internal threads 434 arranged on the inner wall of the first threaded buckle 433 are completely matched with the first external threads 437 arranged on the outer wall of the first dismounting nut 436, that is, engaged locking of the first internal threads 434 and the first external threads 437 can be achieved. Therefore, when the first rotor 21 needs to be mounted on the rotor arm 3, since the first motor 41 is fixed at the end part of the rotor arm 3, the first rotor 21 is mounted on the first motor 41. At this time, only the first rotor 21 needs to be manually rotated to engage the first external threads 437 with the first internal threads 434, the first rotor 21 is further rotated to lock the first dismounting nut 436 with the first threaded buckle 433, and since the first dismounting nut 436 is fixed on the first rotor 21, and the first threaded buckle 433 is fixed on the first rotor 21, the locking and mounting of the first rotor 21 and the first motor 41 (the rotor arm 3) are achieved. When the first rotor needs to be dismounted, the first rotor 21 can be rotated reversely at the moment to separate the first external threads 437 from the first internal threads 434. Fast and convenient operation is achieved.

It needs to be noted that in an actual flight process of the unmanned aerial vehicle, the rotation direction of the first rotor 21 is a counterclockwise rotation direction, at this time, since the first rotor 21 is in a continuously rotating state in the flight process, the first rotor 21 and the first motor 41 are fixedly connected in the embodiment of the present invention also by rotating. For example, when the first rotor 21 rotates clockwise relative to the first motor 41 to fasten them, since the normal rotation of the first rotor 21 is counterclockwise in the flight process, with the normal counterclockwise rotation of the first rotor 21 at the moment, the first rotor 21 has a trend of counterclockwise rotation relative to the first motor 41. Since the first rotor 21 rotates clockwise relative to the first motor 41 to fasten them, on the contrary, when the first rotor 21 rotates counterclockwise relative to the first motor 41, the fastening relation between the first rotor 21 and the first motor 41 becomes loose, and the first rotor 21 even flies away from the first motor 41 to cause such a phenomenon that the unmanned aerial vehicle crashes.

Therefore, to prevent the looseness of the fastening relation between the first rotor 21 and the first motor 41 due to the normal counterclockwise rotation of the first rotor 21 in the flight process of the multi-rotor flight equipment, in the embodiment of the present invention, the rotational screwing direction between the first rotor 21 and the first motor 41 is also set as the counterclockwise rotation direction. That is to say, the engaged locking direction of the first external threads 437 arranged on the outer wall of the first dismounting nut 436 and the first internal threads 434 arranged on the inner wall of the first threaded buckle 433 is also the counterclockwise direction. Therefore, when the first rotor 21 rotates counterclockwise relative to the first motor 41 to fasten them, since the normal rotation of the first rotor 21 is counterclockwise in the flight process, with the normal counterclockwise rotation of the first rotor 21 at the moment, the first rotor 21 has a trend of counterclockwise rotation relative to the first motor 41.

As the first rotor 21 just rotates counterclockwise relative to the first motor 41 to fasten them, on the one hand, it effectively prevents the technical defects that when the first rotor 21 rotates clockwise relative to the first motor 41 to achieve the engaged locking, the fastening relation between the first rotor 21 and the first motor 41 becomes loose and the first rotor 21 even flies away from the first motor 41 to cause the crash of the unmanned aerial vehicle because the normal rotation of the first rotor 21 is counterclockwise. On the other hand, since the first rotor 21 rotates counterclockwise relative to the first motor 41 to fasten them, with the normal counterclockwise rotation of the first rotor 21, the first rotor 21 also has a trend of counterclockwise rotation relative to the first motor 41, and the fastening relation between the first rotor 21 and the first motor 41 is enhanced at the moment as well, thereby guaranteeing the normal safe flight of the flight equipment and having the characteristic of high safety performance.

Further, please continue to refer to Figs. 3-4, as mentioned above, when the second screw 432 penetrates through the first rotor 21 and the second threaded hole 438 successively to fix the first dismounting nut 436 on the first rotor 21, as the first rotor 21 is subjected to more external resistance factors in the flight process of the unmanned aerial vehicle, such as airflow, wind direction or the like, the vibration of the first rotor 21 relative to the first motor 41 and/or the rotor arm 3 in the flight process is relatively large, however, the connection relation among the second screw 432, the first rotor 21 and the first dismounting nut 436 is quite instable due to long-term vibration, and the second screw 432 even becomes loose to cause safety accidents. Therefore, in the embodiment of the present invention, a first damping piece 439 is additionally arranged, and a first through hole is formed in the first damping piece 439, thus allowing the second screw 432 to penetrate through the first through hole, the first rotor 21 and the second threaded hole 438 successively to fix the first dismounting nut 436 on the first rotor 21. Preferably, the first damping piece 439 can be wafer-shaped to increase the contact area of the first damping piece 439 and the upper surface of the first rotor 21, and the first damping piece 439 is fastened relative to the upper surface of the first rotor 21 through the second screw 432, in order to reduce the vibration of the first rotor 21 relative to the first motor 41 and improve the safety and stability in the flight process.

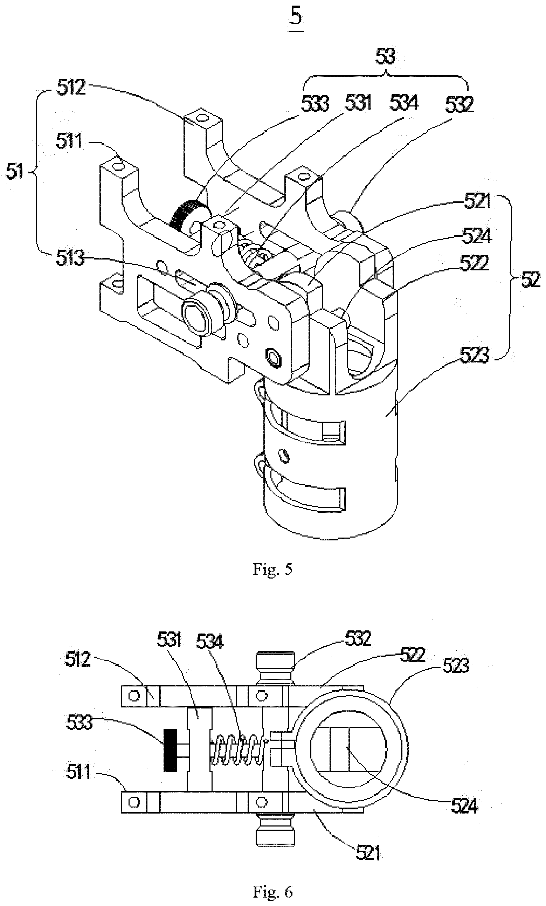

In conjunction with Figs. 1-2 and with reference to Figs. 3-6, for the folding component 5 provided by the first embodiment of the present invention, one rotor arm 3 is rotationally fixed on the fuselage 1 through one folding component 5, so that the rotor arm 3 can unfold or fold relative to the fuselage 1. In this case, in an actual working process, when the flight equipment needs to carry out flight work, the rotor arm 3 rotates relative to the fuselage 1 through the folding component, so that the rotor arm 3 is in an unfolded state relative to the fuselage 1. When the flight equipment does not need to carry out the flight work, the rotor arm 3 rotates relative to the fuselage 1 through the folding component again, so that the rotor arm 3 is in a folded state relative to the fuselage 1. The following defect in the prior art is overcome: when the flight equipment carries no flight work, the first rotor 21 and/or the rotor arm 3 in the unfolded state not only occupy the storage space, but also are liable to collision and damage by other external cargos, thereby greatly shortening the service life of the flight equipment (the first rotor 21), and thus causing a shortcoming of a high maintenance cost due to the frequent maintenance of the first rotor 21. Specifically, as shown in Fig. 5, the folding component 5 at least includes: a side plate part 51, a rotating part 52 and a limiting part 53.

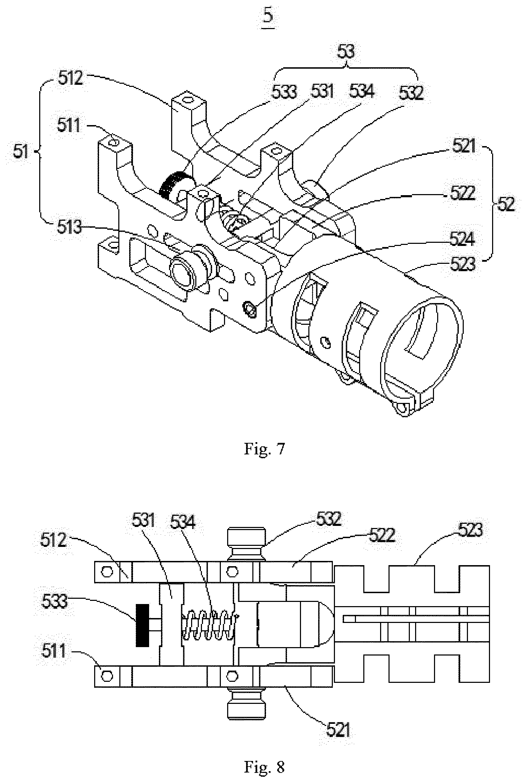

One end of the side plate part 51 is fixed on the end part of the end of the rotor arm 3 away from the first rotor 21. The bottom of the rotating part 52 is fixed on the fuselage 1, and the top thereof is rotationally connected with the side plate part 51 to cause the side plate part 51 and the rotating part 52 to rotate with a connecting point therebetween as a central point. The limiting part 53 is fixed on the side plate part 51 in a sliding manner, and a rotation angle of the rotating part 52 relative to the side plate part 51 is positioned by the movement of the limiting part 53 relative to the rotating part 52. For example, as shown in Fig. 5, the side plate part 51 and the rotating part 52 are vertically distributed at the moment, that is, the angle of the side plate part 51 relative to the rotating part 52 is 90°, and the 90°angle therebetween is positioned by the limiting part 53. As another example, as shown in Fig. 7, the side plate part 51 and the rotating part 52 are horizontally distributed at the moment, that is, the angle of the side plate part 51 relative to the rotating part 52 is 0°, and the 0°angle therebetween is positioned by the limiting part 53.

The working principles of the side plate part 51, the rotating part 52 and the limiting part 53 are further shown as follows:
The side plate part 51 includes a first side plate 511 and a second side plate 512, and sliding grooves 513 for the sliding of the limiting part 53 are respectively formed in the first side plate 511 and the second side plate 512. The first side plate 511 is fixed on one side face of the end part of the rotor arm 3, which can be understood as a first side face of the end part of the rotor arm 3, and the second side plate 512 is fixed on the other side face of the end part of the rotor arm 3, which can be understood as a second side face of the end part of the rotor arm 3. The first side face and the second side face are symmetrically distributed on both sides of the end part of the rotor arm 3. Therefore, the first side plate 511 and the second side plate 512 are fixed on the end part of the rotor arm 3 in a mutually parallel mode.

The limiting part 53 includes: a fixing rod 531, a limiting rod 532 and a tension bar 533. Both ends of the fixing rod 531 are correspondingly fixed on the first side plate 511 and the second side plate 512, so that the fixing rod 531 is located between the first side plate 511 and the second side plate 512 and is respectively perpendicular to the first side plate 511 and the second side plate 512, and a sliding hole enabling the tension bar 533 to penetrate through is formed in the middle position of the fixing rod 531. The tension bar 533 is transversely placed in the sliding groove 513, so that the limiting rod 532 can slide in the sliding groove 513 along the axial line direction of the rotor arm 3. One end of the tension bar 533 penetrates through the sliding hole formed in the fixing rod 531 to be fixedly connected with the limiting rod 532 so that the limiting rod 532 is caused to slide in the sliding groove 513 by pulling the tension bar 533.

The rotating part 52 includes: a first swing lug 521, a second swing lug 522, a fixing cylinder 523 and a rotating shaft 524. A first swing hole is formed in the first swing lug 521; and a second swing hole corresponding to the first swing hole is formed in the second swing lug 522. One end of the fixing cylinder 523 is fixed on the fuselage 1, and the other end of the fixing cylinder is fixedly connected with the first swing lug 521 and the second swing lug 522 respectively. The rotating shaft 524 penetrates through the first side plate 521, the first swing hole, the second swing hole and the second side plate 522 successively to rotationally connect the side plate part 51 with the rotating part 52.

Figs. 5 and 6 show schematic diagrams when the rotating part 52 forms a 90°included angle with the side plate part 51, in this state, the limiting rod 532 slides to the rightmost side (the rightmost side as shown in Figs. 5 and 6) of the sliding groove 513 under the action of the tension bar 533, and the fixing cylinder 523 is in a vertical state at the moment. Further as shown in Fig. 5, a first curve portion is correspondingly arranged on one side of the first swing lug 521 close to the limiting rod 532, the first curve portion is circular arc-shaped, a first clamping position is correspondingly arranged on one side opposite to the limiting rod 532, and the first clamping position is L-shaped. Similarly, a second curve portion is correspondingly arranged on one side of the second swing lug 522 close to the limiting rod 532, the second curve portion is circular arc-shaped, a second clamping position is correspondingly arranged on one side opposite to the limiting rod 532, and the second clamping position is L-shaped.

Specifically, when the rotating part 52 forms a 90°included angle with the side plate part 51 (as shown in Fig. 5), the limiting rod 532 slides the sliding groove 513 to the rightmost side of the sliding groove 513 under the action of the tension bar 533 at the moment, that is, the limiting rod 532 is in contact with the first curve portion and the second curve portion. When the rotating part 52 forms a Concluded angle with the side plate part 51 (as shown in Fig. 7), the limiting rod 532 slides the sliding groove 513 to the left side of the sliding groove 513 under the action of the tension bar 533 at the moment until the first curve portion and the second curve portion are completely below the limiting rod 532. At this time, the limiting rod 532 just falls to the first clamping position and the second clamping position for limiting. Since the limiting rod 532 blocks the upward turning of the first curve portion and the second curve portion at the moment, it limits the upward movement of the first swing lug 521 and the second swing lug 522, and thus the horizontal positioning of the side plate part 51 and the rotating part 52 is achieved.

It needs to be particularly noted that, to reinforce the automatic limiting function of the folding component 5 and to achieve the limiting action between the side plate part 51 and the rotating part 52 without manually pulling the tension bar 533 by an operator, preferably, a spring 534 is further arranged between the sliding hole formed in the middle of the fixing rod 531 and the limiting rod 532, and the spring 534 is sleeved on the outer wall of the tension bar 533.

Just as mentioned above, after the spring 534 is additionally arranged, when the rotating part 52 forms the 90°included angle with the side plate part 51 (as shown in Fig. 5), the limiting rod 532 slides in the sliding groove 513 to the rightmost side of the sliding groove 513 under the compression thrust of the spring 534 at the moment, that is, the limiting rod 532 is in contact with the first curve portion and the second curve portion. When the rotating part 52 needs to form the 0°included angle with the side plate part 51 (as shown in Fig. 7), only the fixing cylinder 523 needs to be overturned, and since the first curve portion and the second curve portion are both circular arc-shaped, the first curve portion and the second curve portion clockwise overcome the compression force of the spring 534 in a contact process with the limiting rod 532 to slowly rotate. When the first curve portion and the second curve portion just cross the limiting rod 532, the limiting rod 532 is pushed by the compression thrust of the spring 534, and the limiting rod 532 quickly returns to the first clamping position and the second clamping position to limit the upward movement of the first swing lug 521 and the second swing lug 522 and realize the horizontal positioning of the side plate part 51 and the rotating part 52.

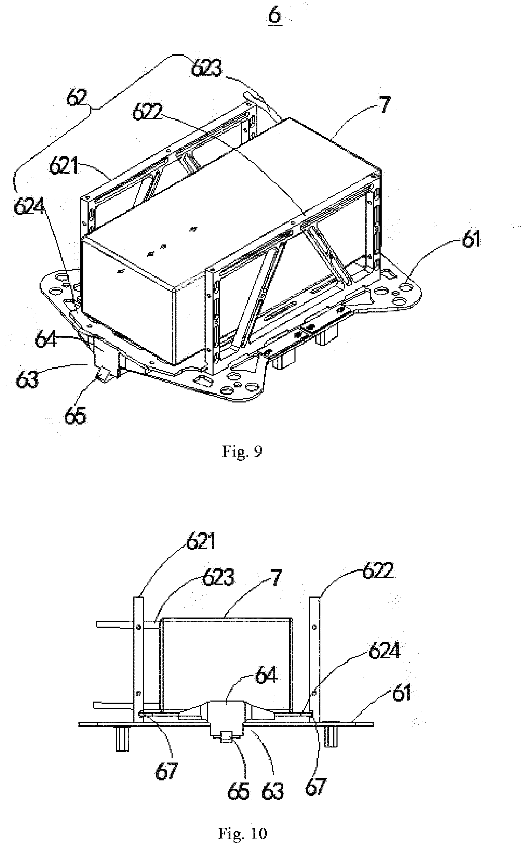

Further, in conjunction with Fig. 1 and with reference to Figs. 9-10, the sliding component 6 is used for placing the battery 7, and the sliding component 6 is in sliding connection with the fuselage 1 to slide relative to the fuselage 1, and the battery is dismounted or mounted by the slide of the sliding component 6 relative to the fuselage 1.

In detail, the sliding component 6 includes a fixing seat 61, a sliding frame 62 and a buckle 63.

The fixing seat 61 is fixed on the bottom of the fuselage 1. The interior of the sliding frame 62 is of a hollow structure, and the space volume of the hollow structure is adaptive to the volume of the battery 7 for placing the battery 7. Moreover, the sliding frame 62 is fixed on the fixing seat 61 in a sliding manner. The buckle 63 is fixed at the end part of the fixing seat 61, and a projection 64 for preventing the battery 7 from sliding is arranged on the buckle 63 to prevent the battery 7 from sliding out from the sliding frame 62 through the projection 64.

Preferably, the sliding frame can include a first side frame 621, a second side frame 622, a third side frame 623 and a sliding plate 624. The first side frame 621, the second side frame 622 and the third side frame 623 are vertically fixed on the fixing seat 61 respectively, the first side frame 621 and the second side frame 622 are oppositely distributed, and the third side frame 623 and the projection 64 are oppositely distributed, so as to form the internal hollow structure of the sliding frame through the first side frame 621, the second side frame 622, the third side frame 623 and the projection 64. A slide rail 67 is respectively arranged on one side of the first side frame 621 and the second side frame 622 fixed to the fixing seat 61, so that the sliding plate 624 is slide rail connection with the first side frame 621 and the second side frame 622 through the slide rails 67, and then the sliding plate 624 slides relative to the first side frame 621 and the second side frame 622 through the slide rails 67. The battery is placed on the sliding plate.

It is worth mentioning that an elastic button 65 is further arranged below the buckle 63. The elastic button 65 is pressed to unfold or clamp the projection 64. The structure of the elastic button 65 in the buckle 63 can be similar to hair pins, folders and other structures in the prior art. When the battery 7 needs to be fixed in the sliding component 6, the elastic button 65 only needs to be pressed downward to unfold the projection 64, then the sliding plate 624 is slid outward relative to the sliding frame, after the battery 7 is fixed on the sliding plate 624, the sliding plate 624 is slid inward relative to the sliding frame, the elastic button 65 is loosened, and the projection leans against the battery 7 to clamp it. The stable mounting of the battery 7 in the flight process of the unmanned aerial vehicle is achieved, and the characteristics of simple operation and convenience for dismounting are achieved.

Further, the unmanned aerial vehicle further includes a bracket 8, the bracket 8 can be composed of two T-shaped frames, namely includes a first T-shaped frame 81 and a second T-shaped frame 82. A vertical end of the T-shaped frame 81 and the vertical end of the second T-shaped frame 82 are fixed at the bottom of the fuselage 1, and a transverse end of the T-shaped frame 81 and the transverse end of the second T-shaped frame 82 constitute a stabilization chessboard for supporting the flight equipment during landing, and the characteristic of high stability is achieved.

Just as shown in Figs. 1-2, the unmanned aerial vehicle can be a six-rotor unmanned aerial vehicle, namely including 6 first rotors 21. Of course, those skilled in the art can understand that the six-rotor unmanned aerial vehicle is merely one implementation. In other words, four-rotor unmanned aerial vehicles, eight-rotor unmanned aerial vehicles, twelve-rotor unmanned aerial vehicles and the like are all applicable to the present invention.

### Embodiment

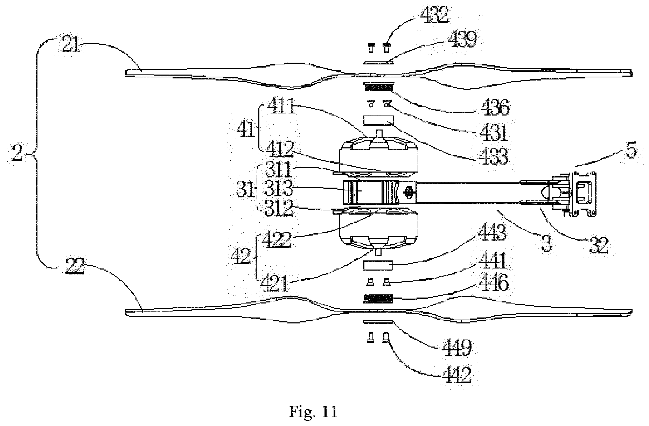

The twelve-rotor unmanned aerial vehicle is used as the embodiment of the present invention. The multi-rotor structure as shown in Figs. 1-2 is applied to the six-rotor unmanned aerial vehicle, it adopts single propellers and single arms, that is, each rotor arm 3 is provided with one first motor 41 and one first rotor 21. When the multi-rotor structure as shown in Figs. 1-2 is applied to the twelve-rotor unmanned aerial vehicle, the multi-rotor structure includes first rotary connecting pieces 4 the number of which is same as that of the first rotors 21, and second rotary connecting pieces the number of which is same as that of the second rotors 22. When each rotor arm 3 is provided with two motors and two rotors, double propellers and double arms (two rotors share one rotor arm 3) can also be adopted to form the multi-rotor structure applied to the twelve-rotor unmanned aerial vehicle, as shown in Fig. 11.

At this time, one end of the rotor arm 3 for connection with the fuselage 1 is used as a connecting end and is rotationally connected with the fuselage 1 through the folding component 5. One end of the rotor arm 3 for connection with the rotor is used as a coaxial end 31, and the coaxial end 31 can include a first end face 311 (an upper end face), a second end face 312 (a lower end face) and an accommodation space 313. In a double-propeller coaxial structure, the first rotor 21 and the second rotor 22 constitute a rotor group 2, the first rotor 21 is rotationally fixed on the first end face 311 of the coaxial end 31 through the first motor 41, and the second rotor 22 is rotationally fixed on the second end face 312 of the coaxial end 31 through a second motor 42. An electronic speed controller respectively connected with the first motor 41 and the second motor 42 is fixed in the accommodation space 313, so that the first motor 41 and the second motor 42 are respectively connected with a flight control system in the fuselage 1 through the electronic speed controller. Accordingly, the flight control system correspondingly drives the first rotor 21 to rotate through the first motor 41 and correspondingly drives the second rotor 22 to rotate through the second motor 42.

Apparently, those skilled in the art can understand that, in the double-propeller coaxial structure, the first rotor 21 is rotationally connected with the first surface 411 of the first motor 41 through the first dismounting thread group 43, the second rotor 22 is rotationally connected with a third surface 421 of the second motor 42 through a second dismounting thread group (the dismounting thread group and the second motor 42 constitute the second rotary connecting piece in the second embodiment), and a fourth surface 422 of the second motor is fixedly connected with the second end face 312 of the coaxial end 31. It has been introduced above in detail that the first rotor 21 is rotationally connected with the first surface 411 of the first motor 41 through the first dismounting thread group 43, and thus it will not be repeated herein. It will be illustrated below in detail that the second rotor 22 is rotationally connected with the third surface 421 of the second motor 42 through the second dismounting thread group.

For the embodiment of the present invention, further referring to Fig. 11, corresponding to the first dismounting thread group 43, the second dismounting thread group at least includes: a third screw 441, a fourth screw 442, a second threaded buckle 443 and a second dismounting nut 446. Second internal threads are arranged on the inner wall of the second threaded buckle 443, and a third threaded hole is formed in the bottom of the second threaded buckle 443, thus allowing the third screw 441 to penetrate through the third threaded hole to fix the second threaded buckle 443 on the third surface 421 of the second motor 42. Second external threads adaptive to the second internal threads are arranged on the outer wall of the second dismounting nut 446, and a fourth threaded hole is formed in the top of the second dismounting nut 446, thus allowing the fourth screw 442 to penetrate through the second rotor 22 and the fourth threaded hole successively to fix the second dismounting nut 446 on the second rotor 22.

The same as the internal structure of the first dismounting thread group 43, the second threaded buckle 443 is on the third surface 421 of the second motor 42 through the third screw 441, and the second dismounting nut 446 is fixed on the second rotor 22 through the fourth screw 442. The second internal threads arranged on the inner wall of the second threaded buckle 443 are completely matched with the second external threads arranged on the outer wall of the second dismounting nut 446, that is, engaged locking of the second internal threads and the second external threads can be achieved. Therefore, when the second rotor 22 needs to be mounted on the rotor shaft 3, since the second motor 42 is fixed at the end part of the rotor shaft 3, the second rotor 22 is mounted on the second motor 42. At this time, the second rotor 22 only needs to be manually rotated to engage the second internal threads with the second external threads, the second rotor is further rotated to lock the second dismounting nut 446 with the second threaded buckle 443, and since the second dismounting nut 446 is fixed on the second rotor 22, and the second threaded buckle 443 is fixed on the second motor 42, the locking and mounting of the second rotor 22 and the second motor 42 (the rotor shaft 3) are achieved. When dismounting is needed, the second rotor 22 can be rotated reversely at the moment to separate the second internal threads from the second external threads. The characteristic of fast and convenient operation is achieved.

It should be particularly noted that, in the embodiment of the present invention, the rotation direction of the first rotor 21 is a counterclockwise direction, then the rotation direction of the second rotor 22 is a clockwise direction, because in a single propeller rotation process, the rotation of the first rotor 21 will generate corresponding tension, so corresponding thrust must be generated by a tail rotor on the flight equipment to counteract the generated tension to balance the overall equipment. However, in the embodiment of the present invention, the double propellers (the first rotor 21 and the second rotor 22) are two reverse propellers, that is, the rotation direction of the first rotor 21 is the counterclockwise direction and the rotation direction of the second rotor 22 is the clockwise direction, so that the two rotors generate two reverse twisting forces that directly offset each other. In this way, on the one hand, the stability of the flight equipment is better, and the direction is easy to control; on another hand, the structure is simple, and the occurrence of safety faults is reduced; and on yet another hand, the flight power of the flight equipment is higher, the bearing capacity is larger, and the adaptability is wide.

It also needs to be noted that in the actual flight process of the unmanned aerial vehicle provided by the embodiment of the present invention, the rotation direction of the second rotor 22 is the clockwise rotation direction, at this time, since the second rotor 22 is in a continuously rotating state in the flight process, the second rotor 22 and the second motor 42 are fixedly connected in the embodiment of the present invention also by rotating. For example, when the second rotor 22 rotates counterclockwise relative to the second motor 42 to fasten them, since the normal rotation of the second rotor 22 is clockwise in the flight process, with the normal clockwise rotation of the second rotor 22 at the moment, the second rotor 22 has a trend of clockwise rotation drive relative to the second motor 42. Since the second rotor 22 rotates counterclockwise relative to the second motor 42 to fasten them, on the contrary, when the second rotor 22 rotates clockwise relative to the second motor 42, the fastening relation between the second rotor 22 and the second motor 42 becomes loose, and the second rotor 22 even flies away from the second motor 42 to cause such a phenomenon that the unmanned aerial vehicle crashes.

Therefore, to avoid the looseness of the fastening relation between the second rotor 22 and the second motor 42 due to the normal clockwise rotation of the second rotor 22 in the flight process of the multi-rotor flight equipment, in the embodiment of the present invention, the rotational screwing direction between the second rotor 22 and the second motor 42 is also set as the clockwise rotation direction. That is to say, the engaged locking direction of the second external threads arranged on the outer wall of the second dismounting nut 446 and the second internal threads arranged on the inner wall of the second threaded buckle 443 is also the clockwise direction. Therefore, when the second rotor 22 rotates clockwise relative to the second motor 42 to fasten them, since the normal rotation of the second rotor 22 is clockwise in the flight process, with the normal clockwise rotation of the second rotor 22 at the moment, the second rotor 22 has a trend of clockwise rotation relative to the second motor 42.

As the second rotor 22 just rotates clockwise relative to the second motor 42 to fasten them, on the one hand, it effectively prevents that the technical defects that when the second rotor 22 rotates counterclockwise relative to the second motor 42 to achieve the engaged locking, the fastening relation between the second rotor 22 and the second motor 42 becomes loose and the second rotor 22 even flies away from the second motor 42 to cause the crash of the unmanned aerial vehicle because the normal rotation of the second rotor 22 is clockwise. On the other hand, since the second rotor 22 rotates clockwise relative to the second motor 42 to fasten them, with the normal clockwise rotation of the second rotor 22, the second rotor 22 also has a trend of clockwise rotation relative to the second motor 42, and the fastening relation between the second rotor 22 and the second motor 42 is enhanced at the moment as well, thereby guaranteeing the normal safe flight of the flight equipment and having the characteristic of high safety performance.

Further, please continue to refer to Fig. 11, as mentioned above, when the fourth screw 442 penetrates through the second rotor 22 and the fourth threaded hole successively to fix the second dismounting nut 446 on the second rotor 22, as the second rotor 22 is subjected to more external resistance factors in the flight process of the unmanned aerial vehicle, such as airflow, wind direction or the like, the vibration of the second rotor 22 relative to the second motor 42 and/or the rotor shaft 3 in the flight process is relatively large, however, the connection relation among the fourth screw 442, the second rotor 22 and the second dismounting nut 446 is quite instable due to long-term vibration, and the fourth screw 442 even becomes loose to cause safety accidents. Therefore, in the second embodiment of the present invention, a second damping piece 449 is additionally arranged, and a second through hole is formed in the second damping piece 449, thus allowing the fourth screw 442 to penetrate through the second through hole, the second rotor 22 and the fourth threaded hole successively to fix the second dismounting nut 446 on the second rotor 22. Preferably, the second damping piece 449 can be wafer-shaped to increase the contact area of the second damping piece 449 and the lower surface of the second rotor 22, and the second damping piece 449 is fastened relative to the lower surface of the second rotor 22 through the fourth screw 442, in order to reduce the vibration of the second rotor 22 relative to the second motor 42 and improve the safety and stability in the flight process.

Except for the second rotor 22 and the second dismounting thread group, the rest components, such as the first rotor 21, the first dismounting thread group 43, the folding component 5, the sliding component 6, the bracket 8 and the like in the embodiment of the present invention are completely the same as those previously described, and for the parts that are not described in detail in the embodiment, reference can be made to the previous detailed description.

The beneficial effects of the multi-rotor structure applied to the unmanned aerial vehicle provided by the present invention are described as follows:
(1) in the present invention, each first rotor 21 is rotationally connected with the first surface 411 of the first motor 41 by one corresponding first dismounting thread group 43, so that when the mounting or dismounting work of the first rotor 21 is carried out, the fastening or separation between the first rotor 21 and the first motor 41 can be achieved just by rotating the first rotor 21 without using an external operating tool (e.g. a handle), thereby being fast, portable and high in working efficiency;
(2) in the present invention, the engaged locking direction of the first internal threads 434 and the first external threads 437 are designed to be the same as the normal rotation direction of the first rotor 21, namely also the counterclockwise direction, in this way, on the one hand, the technical defects that the fastening relation between the first rotor 21 and the first motor 41 becomes loose and that the first rotor 21 even flies away from the first motor 41 to cause the crash of the unmanned aerial vehicle are effectively prevented; and on the other hand, the fastening relation between the first rotor 21 and the first motor 41 is enhanced as well, thereby guaranteeing the normal safe flight of the flight equipment and having the characteristic of high safety performance;
(3) in the present invention, the first damping piece 439 is additionally arranged, and the first damping piece 439 is fastened relative to the upper surface of the first rotor 21 through the second screw 432, in order to reduce the vibration of the first rotor 21 relative to the first motor 41 and improve the safety and stability in the flight process;
(4) in the present invention, the rotor arm 3 rotates relative to the fuselage 1 through the folding component 5, so that the rotor arm 3 can unfold or fold relative to the fuselage 1, and it overcomes the defect in the prior art that when the flight equipment carries no flight work, the first rotor 21 and/or the rotor arm 3 in the unfolded state not only occupy the storage space, but also are liable to collision and damage by other external cargos, thereby greatly shortening the service life of the flight equipment (the first rotor 21), and thus causing a high maintenance cost due to the frequent maintenance of the first rotor 21; and
(5) in the present invention, since the sliding component 6 is arranged, when the battery 7 needs to be fixed in the sliding component 6, the elastic button 65 only needs to be pressed downward to unfold the projection 64, then the sliding plate 624 is slid outward relative to the sliding frame, after the battery 7 is fixed on the sliding plate 624, the sliding plate 624 is slid inward relative to the sliding frame, the elastic button 65 is loosened, the projection leans against the battery 7 to clamp it, the stable mounting of the battery 7 in the flight process of the unmanned aerial vehicle is achieved, and the present invention has the characteristics of simple operation and convenience for dismounting.

Although the preferred embodiment of the present invention has been described, those skilled in the art can make additional variations and modifications to this embodiment once getting the basic creative concept. Therefore, the appended claims are intended to be interpreted as including the preferred embodiments and all variations and modifications that fall within the scope of the present invention, as defined by the dependend claims.

Apparently, those skilled in the art can make various changes and variations to the present invention without departing from the scope of the present invention. Therefore, if these modifications and variations of the present invention belong to the scope of the claims of the present invention, the present invention is also intended to encompass these changes and variations.

## Claims

1. An unmanned aerial vehicle comprising a multi-rotor structure, wherein the unmanned aerial vehicle comprises a fuselage (1), at least four first rotors (21), second rotors (22) the number of which is same as that of the first rotors (21), and rotor arms (3) the number of which is same as that of the first rotors (21) or the second rotors (22), each rotor arm (3) being provided with a first rotor (21) and a second rotor (22); the multi-rotor structure comprises:
first rotary connecting pieces (4) the number of which is same as that of the first rotors (21), wherein one of the first rotors (21) is rotationally connected with one of the rotor arms (3) through one of the first rotary connecting pieces (4), and the first rotary connecting piece (4) comprises: a first motor (41), wherein the first motor (41) comprises a first surface (411) and a second surface (412), and the first motor (41) is fixed on the rotor arm (3) through the second surface (412); a first dismounting thread group (43), wherein the first rotor (21) is rotationally connected with the first surface (411) through the first dismounting thread group (43) to achieve the mounting or dismounting between the first rotor (21) and the first motor (41) just by rotating the first rotor (21); and
second rotary connecting pieces the number of which is same as that of the second rotors (22), wherein one of the second rotors (22) is rotationally connected with one of the rotor arms (3) through one of the second rotary connecting pieces, and the second rotary connecting piece comprises: a second motor (42), wherein the second motor (42) comprises a third surface (421) and a fourth surface (422), and the second motor (42) is fixed on the rotor arm (3) through the fourth surface (422); and a second dismounting thread group, wherein the second rotor (22) is rotationally connected with the third surface (421) through the second dismounting thread group to achieve the mounting or dismounting between the second rotor (22) and the second motor (42) just by rotating the second rotor (22).

2. The unmanned aerial vehicle of claim 1, wherein the first dismounting thread group (43) comprises:
a first screw (431);
a second screw (432);
a first threaded buckle (433), wherein first internal threads (434) are arranged on an inner wall of the first threaded buckle (433), and a first threaded hole (435) is formed in the bottom of the first threaded buckle (433), thus allowing the first screw (431) to penetrate through the first threaded hole (435) to fix the first threaded buckle (433) on the first surface (411); and
a first dismounting nut (436), wherein first external threads (437) are arranged on an outer wall of the first dismounting nut (436), and a second threaded hole (438) is formed in the top of the first dismounting nut (436), thus allowing the second screw (432) to penetrate through the first rotor (21) and the second threaded hole (438) successively to fix the first dismounting nut (436) on the first rotor (21); and
wherein the first internal threads (434) are adaptive to the first external threads (437), and the mounting or dismounting between the first rotor (21) and the first motor (41) is correspondingly achieved by the engagement or disengagement of the first internal threads (434) and the first external threads (437).

3. The unmanned aerial vehicle of claim 2, wherein the first dismounting thread group (43) further comprises:
a first damping piece (439), wherein a first through hole is formed in the first damping piece (439), and the second screw (432) penetrates through the first through hole, the first rotor (21) and the second threaded hole (438) successively to fix the first dismounting nut (436) on the first rotor (21).

4. The unmanned aerial vehicle of claim 1, wherein the second dismounting thread group comprises:
a third screw (441);
a fourth screw (442);
wherein second internal threads are arranged on the inner wall of the second threaded buckle (443), and a third threaded hole is formed in the bottom of the second threaded buckle (443), thus allowing the third screw (441) to penetrate through the third threaded hole to fix the second threaded buckle (443) on the third surface (421); and
a second dismounting nut (446), wherein second external threads are arranged on the outer wall of the second dismounting nut (446), and a fourth threaded hole is formed in the top of the second dismounting nut (446), thus allowing the fourth screw (442) to penetrate through the second rotor (22) and the third threaded hole successively to fix the second dismounting nut (446) on the second rotor (22); and
wherein the second internal threads are adaptive to the second external threads, and the mounting or dismounting between the second rotor (22) and the second motor (42) is correspondingly achieved by the engagement or disengagement of the second internal threads and the second external threads.

5. The unmanned aerial vehicle of claim 4, wherein the first dismounting thread group (43) further comprises:
a second damping piece (449), wherein a second through hole is formed in the second damping piece (449), and the fourth screw (442) penetrates through the second through hole, the second rotor (22) and the fourth threaded hole successively to fix the second dismounting nut (446) on the second rotor (22).

6. The unmanned aerial vehicle of any one of claims 1-4, further comprising:
folding components (5), wherein each folding component (5) is used for rotationally connecting the fuselage (1) with the rotor arm (3) to cause the rotor arm (3) to rotate relative to the fuselage (1) through the folding component (5), so as to achieve the unfolding or folding of the rotor arm (3) relative to the fuselage (1).

7. The multi-rotor structure applied to the unmanned aerial vehicle of claim 6, wherein the folding component (5) comprises:
a side plate part (51), wherein the side plate part (51) is fixed on the end part of the rotor arm (3);
a rotating par (52), wherein the rotating part (52) is fixed on the fuselage (1) and is rotationally connected with the side plate part (51) to achieve the rotatability between the side plate part (51) and the rotating part (52), to allow the rotor arm (3) to rotate relative to the fuselage (1); and
a limiting part (53), wherein the limiting part (53) is fixed on the side plate part (51) for positioning a rotation angle of the rotating part (52) relative to the side plate part (51).

8. The unmanned aerial vehicle of claim 7, wherein:
the end part of the rotor arm (3) comprises a first side face and a second side face, and the first side face and the second side face are symmetrically distributed on both sides of the end part of the rotor arm (3);
the side plate part (51) comprises:
a first side plate (511), wherein the first side plate (511) is fixed on the first side face; and
a second side plate (512), wherein the second side plate (512) is fixed on the second side face; and
wherein a sliding groove (513) is respectively formed in the first side plate (511) and the second side plate (512) to cause the limiting part (53) to slide in the sliding groove (513).

9. The unmanned aerial vehicle of claim 8, wherein the limiting part (53) comprises:
a fixing rod (531), wherein the fixing rod (531) is fixed between the first side plate (511) and the second side plate (512) and is respectively perpendicular to the first side plate (511) and the second side plate (512), and a sliding hole is formed in the fixing rod (531);
a limiting rod (532), wherein the limiting rod (532) is placed in the sliding groove (513) and is in sliding connection with the sliding groove (513); and
a tension bar (533), wherein one end of the tension bar (533) penetrates through the sliding hole to be fixedly connected with the limiting rod (532) so that the limiting rod (532) is caused to slide in the sliding groove (513) by pulling the tension bar (533).

10. The unmanned aerial vehicle of claim 9, wherein the rotating part (52) comprises:
a first swing lug (521), wherein a first swing hole is formed in the first swing lug (521);
a second swing lug (522), wherein a second swing hole corresponding to the first swing hole is formed in the second swing lug (522);
a fixing cylinder (523), wherein one end of the fixing cylinder (523) is fixed on the fuselage (1), and the other end of the fixing cylinder (523) is fixedly connected with the first swing lug (521) and the second swing lug (522) respectively; and
a rotating shaft (524), wherein the rotating shaft (524) penetrates through the first side plate (511), the first swing hole, the second swing hole and the second side plate (512) successively to rotationally connect the side plate part (51) with the rotating part (52).

## Patentansprüche

1. Unbemanntes Luftfahrzeug, das eine Mehrrotorstruktur umfasst, wobei das unbemannte Luftfahrzeug einen Rumpf (1), mindestens vier erste Rotoren (21), zweite Rotoren (22), deren Anzahl jener der ersten Rotoren (21) entspricht, und Rotorarme (3), deren Anzahl jener der ersten Rotoren (21) oder der zweiten Rotoren (22) entspricht, umfasst, wobei jeder Rotorarm (3) mit einem ersten Rotor (21) und einem zweiten Rotor (22) versehen ist;
wobei die Mehrrotorstruktur Folgendes umfasst:
erste Drehverbindungsstücke (4), deren Anzahl jener der ersten Rotoren (21) entspricht, wobei einer der ersten Rotoren (21) mit einem der Rotorarme (3) durch eines der ersten Drehverbindungsstücke (4) drehverbunden ist und das erste Drehverbindungsstück (4) Folgendes umfasst: einen ersten Motor (41), wobei der erste Motor (41) eine erste Fläche (411) und eine zweite Fläche (412) umfasst und der erste Motor (41) durch die zweite Fläche (412) an dem Rotorarm (3) fixiert ist; eine erste Abbaugewindegruppe (43), wobei der erste Rotor (21) mit der ersten Fläche (411) durch die erste Abbaugewindegruppe (43) dahingehend drehverbunden ist, das Anbauen oder das Abbauen zwischen dem ersten Rotor (21) und dem ersten Motor (41) lediglich durch Drehen des ersten Rotors (21) zu erzielen; und
zweite Drehverbindungsstücke, deren Anzahl jener der zweiten Rotoren (22) entspricht, wobei einer der zweiten Rotoren (22) mit einem der Rotorarme (3) durch eines der zweiten Drehverbindungsstücke drehverbunden ist und das zweite Drehverbindungsstück Folgendes umfasst: einen zweiten Motor (42), wobei der zweite Motor (42) eine dritte Fläche (421) und eine vierte Fläche (422) umfasst und der zweite Motor (42) durch die vierte Fläche (422) an dem Rotorarm (3) fixiert ist; und
eine zweite Abbaugewindegruppe, wobei der zweite Rotor (22) mit der dritten Fläche (421) durch die zweite Abbaugewindegruppe dahingehend drehverbunden ist, das Anbauen oder das Abbauen zwischen dem zweiten Rotor (22) und dem zweiten Motor (42) lediglich durch Drehen des zweiten Rotors (22) zu erzielen.

2. Unbemanntes Luftfahrzeug nach Anspruch 1, wobei die erste Abbaugewindegruppe (43) Folgendes umfasst:
eine erste Schraube (431);
eine zweite Schraube (432);
eine erste mit einem Gewinde versehene Buchse (433), wobei erste Innengewindegänge (434) an einer Innenwand der ersten mit einem Gewinde versehenen Buchse (433) angeordnet sind und eine erste Gewindebohrung (435) in dem Boden der ersten mit einem Gewinde versehenen Buchse (433) ausgebildet ist, wodurch gestattet wird, dass die erste Schraube (431) zur Fixierung der ersten mit einem Gewinde versehenen Buchse (433) an der ersten Fläche (411) durch die erste Gewindebohrung (435) hindurchgeht; und
eine erste Abbaumutter (436), wobei erste Außengewindegänge (437) an einer Außenwand der ersten Abbaumutter (436) angeordnet sind und eine zweite Gewindebohrung (438) in der Oberseite der ersten Abbaumutter (436) ausgebildet ist, wodurch gestattet wird, dass die zweite Schraube (432) zur Fixierung der ersten Abbaumutter (436) an dem ersten Rotor (21) nacheinander durch den ersten Rotor (21) und die zweite Gewindebohrung (438) hindurchgeht; und
wobei die ersten Innengewindegänge (434) an die ersten Außengewindegänge (437) angepasst sind und das Anbauen oder Abbauen zwischen dem ersten Rotor (21) und dem ersten Motor (41) durch das Ineingriffbringen bzw. Außereingriffbringen der ersten Innengewindegänge (434) und der ersten Außengewindegänge (437) erzielt wird.

3. Unbemanntes Luftfahrzeug nach Anspruch 2, wobei die erste Abbaugewindegruppe (43) ferner Folgendes umfasst:
ein erstes Dämpfungsstück (439), wobei eine erste Durchgangsbohrung in dem ersten Dämpfungsstück (439) ausgebildet ist und die zweite Schraube (432) zur Fixierung der ersten Abbaumutter (436) an dem ersten Rotor (21) nacheinander durch die erste Durchgangsbohrung, den ersten Rotor (21) und die zweite Gewindebohrung (438) hindurchgeht.

4. Unbemanntes Luftfahrzeug nach Anspruch 1, wobei die zweite Abbaugewindegruppe ferner Folgendes umfasst:
eine dritte Schraube (441);
eine vierte Schraube (442);
wobei zweite Innengewindegänge an einer Innenwand der zweiten mit einem Gewinde versehenen Buchse (443) angeordnet sind und eine dritte Gewindebohrung in dem Boden der zweiten mit einem Gewinde versehenen Buchse (443) ausgebildet ist, wodurch gestattet wird, dass die dritte Schraube (441) zur Fixierung der zweiten mit einem Gewinde versehenen Buchse (443) an der dritten Fläche (421) durch die dritte Gewindebohrung hindurchgeht; und
eine zweite Abbaumutter (446), wobei zweite Außengewindegänge an der Außenwand der zweiten Abbaumutter (446) angeordnet sind und eine vierte Gewindebohrung in der Oberseite der zweiten Abbaumutter (446) ausgebildet ist, wodurch gestattet wird, dass die vierte Schraube (442) zur Fixierung der zweiten Abbaumutter (446) an dem zweiten Rotor (22) nacheinander durch den zweiten Rotor (22) und die dritte Gewindebohrung hindurchgeht; und
wobei die zweiten Innengewindegänge an die zweiten Außengewindegänge angepasst sind und das Anbauen oder Abbauen zwischen dem zweiten Rotor (22) und dem zweiten Motor (42) durch das Ineingriffbringen bzw. Außereingriffbringen der zweiten Innengewindegänge und der zweiten Außengewindegänge erzielt wird.

5. Unbemanntes Luftfahrzeug nach Anspruch 4, wobei die erste Abbaugewindegruppe (43) ferner Folgendes umfasst:
ein zweites Dämpfungsstück (449), wobei eine zweite Durchgangsbohrung in dem zweiten Dämpfungsstück (449) ausgebildet ist und die vierte Schraube (442) zur Fixierung der zweiten Abbaumutter (446) an dem zweiten Rotor (22) nacheinander durch die zweite Durchgangsbohrung, den zweiten Rotor (22) und die vierte Gewindebohrung hindurchgeht.

6. Unbemanntes Luftfahrzeug nach einem der Ansprüche 1-4, das ferner Folgendes umfasst:
Klappkomponenten (5), wobei jede Klappkomponente (5) zur Drehverbindung des Rumpfs (1) mit dem Rotorarm (3) zum Bewirken einer Drehung des Rotorarms (3) bezüglich des Rumpfs (1) durch die Klappkomponente (5) verwendet wird, um das Ausklappen oder Einklappen des Rotorarms (3) bezüglich des Rumpfs (1) zu erzielen.

7. Mehrrotorstruktur, die bei dem unbemannten Luftfahrzeug nach Anspruch 6 angewendet wird, wobei die Klappkomponente (5) Folgendes umfasst:
einen Seitenplattenteil (51), wobei der Seitenplattenteil (51) an dem Endteil des Rotorarms (3) fixiert ist;
einen Drehteil (52), wobei der Drehteil (52) an dem Rumpf (1) fixiert ist und mit dem Seitenplattenteil (51) dahingehend drehverbunden ist, die Drehbarkeit zwischen dem Seitenplattenteil (51) und dem Drehteil (52) zum Gestatten einer Drehung des Rotorarms (3) bezüglich des Rumpfs (1) zu erzielen; und
einen Begrenzungsteil (53), wobei der Begrenzungsteil (53) zur Positionierung eines Drehwinkels des Drehteils (52) bezüglich des Seitenplattenteils (51) an dem Seitenplattenteil (51) fixiert ist.

8. Unbemanntes Luftfahrzeug nach Anspruch 7, wobei:
der Endteil des Rotorarms (3) eine erste Seitenfläche und eine zweite Seitenfläche umfasst, und
die erste Seitenfläche und die zweite Seitenfläche auf beiden Seiten des Endteils des Rotorarms (3) symmetrisch verteilt sind;
der Seitenplattenteil (51) Folgendes umfasst:
eine erste Seitenplatte (511), wobei die erste Seitenplatte (511) an der ersten Seitenfläche fixiert ist; und
eine zweite Seitenplatte (512), wobei die zweite Seitenplatte (512) an der zweiten Seitenfläche fixiert ist; und
wobei eine Gleitnut (513) zum Bewirken, dass der Begrenzungsteil (53) in der Gleitnut (513) gleitet, jeweils in der ersten Seitenplatte (511) und der zweiten Seitenplatte (512) ausgebildet ist.

9. Unbemanntes Luftfahrzeug nach Anspruch 8, wobei der Begrenzungsteil (53) Folgendes umfasst:
eine Fixierungsstange (531), wobei die Fixierungsstange (531) zwischen der ersten Seitenplatte (511) und der zweiten Seitenplatte (512) fixiert ist und senkrecht zu der ersten Seitenplatte (511) bzw. der zweiten Seitenplatte (512) ist, und eine Gleitbohrung in der Fixierungsstange (531) ausgebildet ist;
eine Begrenzungsstange (532), wobei die Begrenzungsstange (532) in der Gleitnut (513) platziert ist und mit der Gleitnut (513) in Gleitverbindung steht; und
eine Zugstange (533), wobei ein Ende der Zugstange (533) zur festen Verbindung mit der Begrenzungsstange (532) durch die Gleitbohrung hindurchgeht, so dass durch Ziehen an der Zugstange (533) bewirkt wird, dass die Begrenzungsstange (532) in der Gleitnut (513) gleitet.

10. Unbemanntes Luftfahrzeug nach Anspruch 9, wobei der Drehteil (52) Folgendes umfasst:
eine erste Schwenknase (521), wobei eine erste Schwenkbohrung in der ersten Schwenknase (521) ausgebildet ist;
eine zweite Schwenknase (522), wobei eine zweite Schwenkbohrung, die der ersten Schwenkbohrung entspricht, in der zweiten Schwenknase (522) ausgebildet ist;
einen Fixierungszylinder (523), wobei ein Ende des Fixierungszylinders (523) an dem Rumpf (1) fixiert ist und das andere Ende des Fixierungszylinders (523) mit der ersten Schwenknase (521) bzw. der zweiten Schwenknase (522) fest verbunden ist; und
eine Drehwelle (524), wobei die Drehwelle (524) zur Drehverbindung des Seitenplattenteils (51) mit dem Drehteil (52) nacheinander durch die erste Seitenplatte (511), das erste Schwenkloch, das zweite Schwenkloch und die zweite Seitenplatte (512) hindurchgeht.

## Revendications

1. Véhicule aérien sans pilote comprenant une structure à rotors multiples, dans lequel le véhicule aérien sans pilote comprend un fuselage (1), au moins quatre premiers rotors (21), des seconds rotors (22) dont le nombre est identique à celui des premiers rotors (21), et des bras de rotor (3) dont le nombre est identique à celui des premiers rotors (21) ou des seconds rotors (22), chaque bras de rotor (3) étant muni d'un premier rotor (21) et d'un second rotor (22); la structure à rotors multiples comprend:
des premières pièces de liaison rotatives (4) dont le nombre est identique à celui des premiers rotors (21), l'un des premiers rotors (21) étant relié en rotation à l'un des bras de rotor (3) par l'une des premières pièces de liaison rotatives (4), et la première pièce de liaison rotative (4) comprenant: un premier moteur (41), le premier moteur (41) comprenant une première surface (411) et une deuxième surface (412), et le premier moteur (41) étant fixé sur le bras de rotor (3) à travers la deuxième surface (412); un premier groupe de filetage de démontage (43), le premier rotor (21) étant connecté en rotation avec la première surface (411) par le premier groupe de filetage de démontage (43) pour effectuer le montage ou le démontage entre le premier rotor (21) et le premier moteur (41) juste en tournant le premier rotor (21); et
des secondes pièces de liaison rotatives dont le nombre est identique à celui des seconds rotors (22), l'un des seconds rotors (22) étant relié en rotation à l'un des bras de rotor (3) par l'une des seconde pièces de liaison rotatives, et la seconde pièce de liaison rotative comprenant: un second moteur (42), le second moteur (42) comprenant une troisième surface (421) et une quatrième surface (422), et le second moteur (42) étant fixé sur le bras de rotor (3) à travers la quatrième surface (422); et un second groupe de filetage de démontage, le second rotor (22) étant connecté en rotation avec la troisième surface (421) à travers le second groupe de filetage de démontage pour effectuer le montage ou le démontage entre le second rotor (22) et le second moteur (42) juste en tournant le second rotor (22).

2. Véhicule aérien sans pilote selon la revendication 1, dans lequel le premier groupe de filetage de démontage (43) comprend:
une première vis (431);
une deuxième vis (432);
une première boucle filetée (433), dans laquelle des premiers filetages intérieurs (434) sont disposés sur une paroi intérieure de la première boucle filetée (433), et un premier trou fileté (435) est formé dans le fond de la première boucle filetée (433), permettant ainsi à la première vis (431) de pénétrer à travers le premier trou fileté (435) pour fixer la première boucle filetée (433) sur la première surface (411); et
un premier écrou de démontage (436), dans lequel des premiers filetages extérieurs (437) sont disposés sur une paroi extérieure du premier écrou de démontage (436), et un deuxième trou fileté (438) est formé dans le sommet du premier écrou de démontage (436), permettant ainsi à la deuxième vis (432) de pénétrer à travers le premier rotor (21) et le deuxième trou fileté (438) de manière successive pour fixer le premier écrou de démontage (436) sur le premier rotor (21); et
les premiers filetages intérieurs (434) étant adaptables aux premiers filetages extérieurs (437), et le montage ou le démontage entre le premier rotor (21) et le premier moteur (41) étant réalisé de manière correspondante par l'engagement ou le désengagement des premiers filetages intérieurs (434) et des premiers filetages extérieurs (437).

3. Véhicule aérien sans pilote selon la revendication 2, dans lequel le premier groupe de filetage de démontage (43) comprend en outre:
une première pièce amortisseuse (439), un premier trou traversant étant formé dans la première pièce amortisseuse (439), et la deuxième vis (432) pénètre à travers le premier trou traversant, le premier rotor (21) et le deuxième trou fileté (438) de manière successive pour fixer le premier écrou de démontage (436) sur le premier rotor (21).

4. Véhicule aérien sans pilote selon la revendication 1, dans lequel le second groupe de fils de démontage comprend:
une troisième vis (441);
une quatrième vis (442);
des seconds filetages intérieurs étant disposés sur la paroi intérieure de la seconde boucle filetée (443), et un troisième trou fileté étant formé dans le fond de la seconde boucle filetée (443), permettant ainsi à la troisième vis (441) de pénétrer à travers le troisième trou fileté pour fixer la seconde boucle filetée (443) sur la troisième surface (421); et
un second écrou de démontage (446), dans lequel des seconds filetages extérieurs sont disposés sur la paroi extérieure du second écrou de démontage (446), et un quatrième trou fileté est formé dans le sommet du second écrou de démontage (446), permettant ainsi à la quatrième vis (442) de pénétrer à travers le second rotor (22) et le troisième trou fileté de manière successive pour fixer le second écrou de démontage (446) sur le second rotor (22); et
les seconds filetages intérieurs étant adaptables aux seconds filetages extérieurs, et le montage ou le démontage entre le second rotor (22) et le second moteur (42) étant réalisé de manière correspondante par l'engagement ou le désengagement des seconds filetages intérieurs et des seconds filetages extérieurs.

5. Véhicule aérien sans pilote selon la revendication 4, dans lequel le premier groupe de filetage de démontage (43) comprend en outre:
une seconde pièce amortisseuse (449), un second trou traversant étant formé dans la seconde pièce amortisseuse (449), et la quatrième vis (442) pénètre à travers le second trou traversant, le second rotor (22) et le quatrième trou fileté de manière successive pour fixer le second écrou de démontage (446) sur le second rotor (22).

6. Véhicule aérien sans pilote selon l'une quelconque des revendications 1 à 4, comprenant en outre:
des éléments de pliage (5), chaque élément de pliage (5) étant utilisé pour relier en rotation le fuselage (1) avec le bras de rotor (3) pour faire tourner le bras de rotor (3) par rapport au fuselage (1) à travers l'élément de pliage (5), de manière à réaliser le dépliage ou le pliage du bras de rotor (3) par rapport au fuselage (1).

7. Structure à rotors multiples appliquée au véhicule aérien sans pilote selon la revendication 6, dans laquelle l'élément de pliage (5) comprend:
une partie de plaque latérale (51), la partie de plaque latérale (51) étant fixée sur la partie d'extrémité du bras de rotor (3);
une pièce rotative (52), la partie rotative (52) étant fixée sur le fuselage (1) et étant reliée en rotation à la partie de plaque latérale (51) pour obtenir la possibilité de rotation entre la partie de plaque latérale (51) et la partie rotative (52), pour permettre au bras de rotor (3) de tourner par rapport au fuselage (1); et
une partie de limitation (53), la partie de limitation (53) étant fixée sur la partie de plaque latérale (51) pour positionner un angle de rotation de la partie rotative (52) par rapport à la partie de plaque latérale (51).

8. Véhicule aérien sans pilote selon la revendication 7, dans lequel:
la partie d'extrémité du bras de rotor (3) comprend une première face latérale et une seconde face latérale, et la première face latérale et la seconde face latérale sont réparties symétriquement des deux côtés de la partie d'extrémité du bras de rotor (3);
la partie de plaque latérale (51) comprend:
une première plaque latérale (511), la première plaque latérale (511) étant fixée sur la première face latérale; et
une seconde plaque latérale (512), la seconde plaque latérale (512) étant fixée sur la seconde face latérale; et
une rainure de glissement (513) étant formée respectivement dans la première plaque latérale (511) et la seconde plaque latérale (512) pour amener la partie de limitation (53) à glisser dans la rainure de glissement (513).

9. Véhicule aérien sans pilote selon la revendication 8, dans lequel la partie de limitation (53) comprend:
une tige de fixation (531), la tige de fixation (531) étant fixée entre la première plaque latérale (511) et la seconde plaque latérale (512) et étant respectivement perpendiculaire à la première plaque latérale (511) et à la seconde plaque latérale (512), et un trou coulissant est formé dans la tige de fixation (531);
une tige de limitation (532), la tige de limitation (532) étant placée dans la rainure de glissement (513) et étant en liaison coulissante avec la rainure de glissement (513); et
une barre de traction (533), une extrémité de la barre de traction (533) pénétrant à travers le trou coulissant pour être reliée de manière fixe à la tige de limitation (532) de sorte que la barre de limitation (532) est amenée à glisser dans la rainure de glissement (513) en tirant la barre de traction (533).

10. Véhicule aérien sans pilote selon la revendication 9, dans lequel la partie rotative (52) comprend:
une première patte d'oscillation (521), un premier trou d'oscillation étant formé dans la première patte d'oscillation (521);
une seconde patte d'oscillation (522), un second trou d'oscillation correspondant au premier trou d'oscillation étant formé dans la seconde patte d'oscillation (522);
un cylindre de fixation (523), une extrémité du cylindre de fixation (523) étant fixée sur le fuselage (1), et l'autre extrémité du cylindre de fixation (523) est reliée de manière fixe respectivement à la première patte d'oscillation (521) et à la seconde patte d'oscillation (522); et un arbre rotatif (524), l'arbre rotatif (524) pénétrant à travers la première plaque latérale (511), le premier trou d'oscillation, le second trou d'oscillation et la seconde plaque latérale (512) de manière successive pour relier en rotation la partie de plaque latérale (51) avec la partie rotative (52).
